Europäisches Patentamt

European Patent Office

Office européen des brevets

(19)

(11) Veröffentlichungsnummer: **0 117 268**
**B1**

# (12)     EUROPÄISCHE PATENTSCHRIFT

(45) Veröffentlichungstag der Patentschrift:
**10.12.86**

(21) Anmeldenummer: **83101921.1**

(22) Anmeldetag: **26.02.83**

(51) Int. Cl.⁴: **H 01 S 3/05,** H 01 S 3/083

(54)  **Ringlaserkreisel.**

(43) Veröffentlichungstag der Anmeldung:
**05.09.84 Patentblatt 84/36**

(45) Bekanntmachung des Hinweises auf die Patenterteilung:
**10.12.86 Patentblatt 86/50**

(84) Benannte Vertragsstaaten:
**DE FR GB**

(56) Entgegenhaltungen:
**FR - A - 2 058 417**
**FR - A - 2 175 662**

(73) Patentinhaber: **Honeywell Regelsysteme GmbH,
Kaiserleistrasse 55, D-6050 Offenbach am Main (DE)**

(72) Erfinder: **Baumann, Rainer, Dipl.-Phys., Kilianstädter
Strasse 13, D-6454 Bruchköbel (DE)**
Erfinder: **Hansli, Werner, Dipl.-Ing., Moosbergstrasse 30,
D-6100 Darmstadt (DE)**
Erfinder: **Weih, Rudolf, Dipl.-Ing., Lindenstrasse 32,
D-6451 Grosskrotzenburg (DE)**
Erfinder: **Bolzmann, Bernd, Dr. rer. nat., Konrad
Adenauer Strasse 18, D-6454 Bruchköbel (DE)**
Erfinder: **Holick, Franz-Herbert, Dipl.-Ing.,
Hermesstrasse 1, D-6078 Neu-Isenburg (DE)**

(74) Vertreter: **Herzbach, Dieter et al, Honeywell Europe S.A.
Holding KG Patent- und Lizenzabteilung
Kaiserleistrasse 55 Postfach 184, D-6050 Offenbach am
Main (DE)**

# Beschreibung

Die vorliegende Erfindung betrifft einen modular aufgebauten Ringlaserkreisel nach dem Gattungsbegriff des Anspruches 1.

Das Prinzip des Ringlaserkreisels basiert auf der allgemeinen Relativitätstheorie, die u.a. besagt, dass die optische Weglänge eines sich in einem Element fortpflanzenden Lichtstrahles in einem sich bewegenden System davon abhängt, ob sich das Element in Fortpflanzungsrichtung des Lichtstrahles oder entgegengesetzt bewegt. Ist der Lichtstrahl in sich auf einem Kreis oder auf einem Polygon geschlossen, so kann man eine Drehbewegung sensieren, da bei einer Drehbewegung der sich in Richtung der Drehbewegung fortpflanzende Lichtstrahl einen weiteren Weg zurückzulegen hat als einer, der entgegen der Drehrichtung verläuft. Der Wegunterschied ist hierbei ein Mass für die Rotationsgeschwindigkeit des Systems. Ringlaserkreisel dienen der feinfühligen Erfassung solcher Drehbewegungen. Was den Aufbau eines solchen Ringlaserkreisels betrifft, so umfasst dieser im wesentlichen eine Laserröhre und einen optischen Resonator einer bestimmten geschlossenen Konfiguration, wobei sich das Lasermedium integriert im optischen Resonator oder in einer austauschbaren Röhre befinden kann. Im letzteren Fall spricht man von einem modularen Aufbau. Der modulare Aufbau besitzt bezüglich der Fertigungs- und Wartungskosten bei einer Serienfertigung wesentliche Vorteile gegenüber einem integrierten Aufbau, bei dem der Resonatorblock zugleich die Laserröhre bildet.

Es ist die Aufgabe der vorliegenden Erfindung, einen modular aufgebauten Ringlaserkreisel der eingangs genannten Art anzugeben, der fertigungstechnisch besonders einfach herzustellen ist und sich durch gute Leistungsdaten auszeichnet. Die Lösung dieser Aufgabe gelingt gemäss den kennzeichnenden Merkmalen des Anspruches 1. Weitere vorteilhafte Ausgestaltungen des erfindungsgemässen Ringlaserkreisels sind den Unteransprüchen entnehmbar.

Anhand eines in den Figuren der beiliegenden Zeichnung dargestellten Ausführungsbeispieles sei im folgenden die Erfindung näher beschrieben. Es zeigen:

Figur 1 eine teilweise aufgeschnittene Draufsicht auf den erfindungsgemässen modularen Ringlaserkreisel; und

Figur 2 eine teilweise geschnittene Vorderansicht des Ringlaserkreisels gemäss Figur 1.

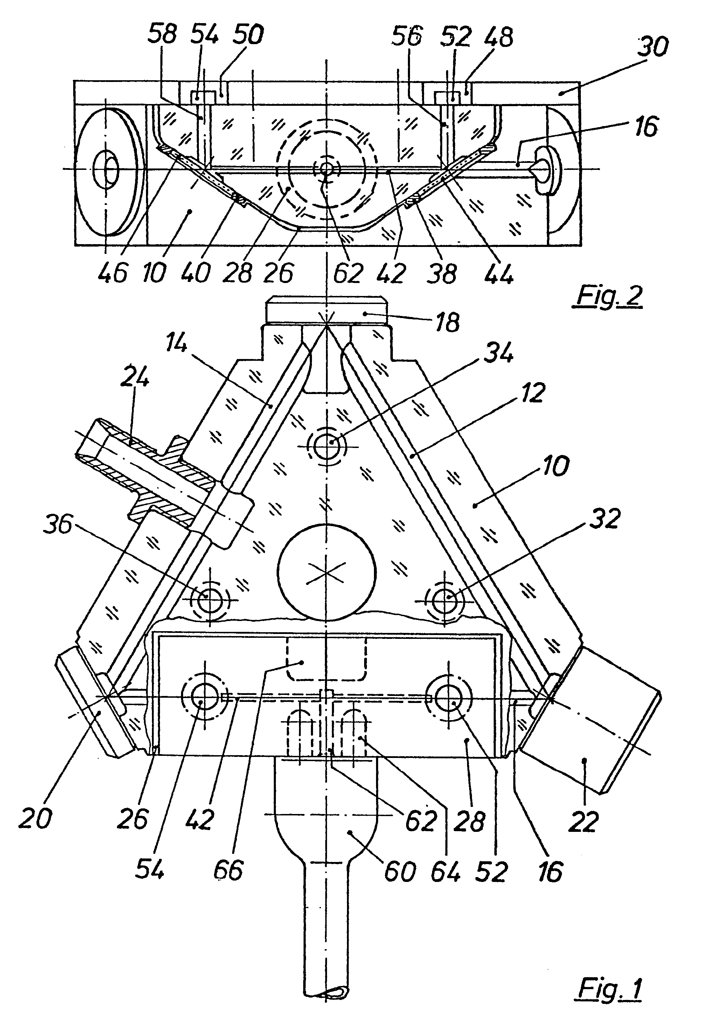

Gemäss den Figuren 1 und 2 umfasst der Ringlaserkreisel einen Resonatorblock 10 aus Glaskeramik mit einem sehr geringen thermischen Ausdehnungskoeffizienten. Der Resonatorblock 10 besitzt im wesentlichen die Gestalt eines gleichschenkligen Dreiecks. Parallel zu den Seitenwänden des gleichschenkligen Dreiecks sind Bohrungen 12, 14 und 16 in dem Resonatorblock 10 angebracht, die sich in den Eckpunkten des Dreiecks schneiden und den Weg für die umlaufenden Laserstrahlen vorgeben. In den Eckpunkten ist der Resonatorblock 10 jeweils plangeschliffen und auf diesen Planflächen sind jeweils nicht näher dargestellte Spiegel aufgebracht. Ein sphärisch-konkaver Auslegespiegel 18 dient der Auskopplung der gegensinnig umlaufenden Laserstrahlen zwecks Signalauswertung. Ein Planspiegel 20 dient der Lichtumlenkung und kann zusätzlich mit einem Lichtaufnehmer zur Resonatorlängenregelung versehen sein. Schliesslich ist ein weiterer Planspiegel 22 mit einem Piezotreiber und einem Übertrager zum Resonatorlängenausgleich versehen. Über einen abquetschbaren Evakuierungsanschluss 24 lässt sich der aus den Bohrungen 12-16 bestehende Resonatorraum evakuieren. An die Evakuierung des Resonatorraumes sind keine allzuhohen Anforderungen zu stellen, da dieser Resonatorraum keinen Teil der Laserröhre bildet. Es ist lediglich dafür Sorge zu tragen, dass nicht durch etwa vorhandene Partikel Rückstreuungen des Laserlichts auftreten.

In den Resonatorblock 10 ist von der Oberfläche und von der Seitenfläche her eine prismatische Ausnehmung 26 eingearbeitet, die im vorliegenden Beispiel die Resonatorbohrung 16 unter dem Brewster-Winkel schneidet. Eine als prismatisches Gegenstück ausgebildete Laserröhre 28 ist an einer Halteplatte 30 befestigt und wird mit dieser Platte in die Ausnehmung 26 eingesetzt und zentriert.

In dem Resonatoblock 10 sind drei Bohrungen 32, 34 und 36 angebracht und über nicht dargestellte Invarschrauben wird die Halteplatte 30 gegen den Resonatorblock 10 gezogen. Nicht-ausgasende O-Ringe 38, 40 sind konzentrisch zu den Austrittsöffnungen der Resonatorbohrung 16 in die prismatische Ausnehmung 26 angeordnet und werden zusammengedrückt, wenn die Halteplatte 30 gegen die Oberfläche der Laserröhre 28 gezogen wird.

Die Laserröhre 28 weist eine längs durch den prismatischen Block gebohrte Kapillare 42 auf. Die Laserkapillare 42 wird nach aussen durch unter dem Brewster-Winkel auf die Dachkantflächen der prismatischen Laserröhre 28 aufgesetzte Fenster 44, 46 abgeschlossen. Diese Brewster-Fenster 44, 46, die aus Quarzglas bestehen, werden vorzugsweise auf die Prismenflächen der Laserröhre 28 «aufgesprengt», d.h. die miteinander in Kontakt gelangenden Flächen werden so fein poliert, dass die Brewster-Fenster 44, 46 auf Grund molekularer Kräfte auf den Gegenflächen der Laserröhre 28 anhaften. Ein solcher Kontakt wird auch als optischer Kontakt bezeichnet. In gleicher Weise werden die Spiegel 18-22 an dem Resonatorblock 10 sowie die Laserröhre 28 an der Halteplatte 30 befestigt.

Durch die Lage der Brewster-Fenster bezüglich der Resonatorebene wird der Polarisationszustand des Laserlichts bestimmt. Die Röhre ist nun derart in den Block eingesetzt, dass das Laserlicht senkrecht zur Laserebene polarisiert ist (d.h. in sogenannter S-Polarisation). Diese S-Polarisation der Röhre hat gegenüber der P-Polarisation einer um 90° gedrehten Laserröhre den Vorteil höherer Reflektivität und geringerer Rückstreuung an den Spiegeln.

Der Resonatorblock 10, die Laserröhre 28 und die Halteplatte 30 bestehen aus dem gleichen glaskeramischen Material mit extrem geringem thermischen Ausdehnungskoeffizienten. Die Laserröhre 28 und die Halteplatte 30 werden getempert, um ihr thermisches Ausdehnungsverhalten an dasjenige der Brewster-Fenster 44, 46 anzupassen, da ansonsten durch Spannungen in den Brewster-Fenstern Doppelbrechungen entstehen, die zu elliptisch polarisiertem Licht und damit zu einer magnetischen Empfindlichkeit des Ringlaserkreisels führen. Vorteilhafterweise können auch Entlastungsrillen in den Brewster-Fenstern 44, 46 vorgesehen sein, um Spannungen von dem lichtübertragenden zentralen Teil des Fensters fernzuhalten.

In der Halteplatte 30 sind Ausnehmungen 48, 50 angeordnet, über die zwei Anoden 52, 54 der Laserröhre 28 zugänglich sind. Die Anoden 52, 54 stehen über Bohrungen 56, 58 mit den Enden der Laserkapillare 42 in Verbindung. Eine Kathode 60 steht über eine Bohrung 62 mit dem Zentrum der Laserkapillare 42 in Verbindung. Die Kathode 60 und die Kathodenbohrung 62 sind senkrecht zu der durch die Anoden 52, 54 und die zugeordneten Anodenbohrungen 56, 58 aufgespannten Ebene angeordnet. Die Füllung der Laserröhre 28 mit einem He-Ne-Gemisch unter einem vorgegebenen Druck und die leckdichte Versiegelung erfolgt über diese Kathode 60. Eine zu der Kathodenbohrung 62 konzentrische Ringnut 64 dient der Aufnahme eines nicht dargestellten Getters zur Reinhaltung des Gasgemisches der Laserröhre 28. Die Aktivierung des Getters erfolgt über eine nicht dargestellte HF-Heizwicklung, die in einer auf der gleichen Achse wie die Kathodenbohrung 62 aber auf der gegenüberliegenden Seite der Laserkapillare 42 angeordneten Ausnehmung 66 angeordnet ist.

## Patentansprüche

1. Modular aufgebauter Ringlaserkreisel mit einem Resonatorblock und einer in diesen eingesetzten Laserröhre, gekennzeichnet durch eine prismatische Ausnehmung (26) in dem Resonatorblock (10), in welche die als prismatischer Gegenblock ausgebildete Laserröhre (28) eingesetzt ist.

2. Ringlaserkreisel nach Anspruch 1, dadurch gekennzeichnet, dass die prismatische Ausnehmung (26) von einer Oberfläche und einer Seitenfläche in den Resonatorblock (10) eingearbeitet ist.

3. Ringlaserkreisel nach Anspruch 1, dadurch gekennzeichnet, dass die von dem Laserstrahl durchsetzen Flächen der prismatischen Ausnehmung (26) und der Laserröhre (28) unter dem Brewster-Winkel angeordnet sind.

4. Ringlaserkreisel nach Anspruch 3, gekennzeichnet durch eine gegen die Oberfläche des Resonatorblockes (10) anziehbare und die Laserröhre (28) in der Ausnehmung (26) zentrierende Halteplatte (30).

5. Ringlaserkreisel nach Anspruch 4, dadurch gekennzeichnet, dass die Laserröhre (28) eine mit einer Bohrung (16) in dem Resonatorblock (10) fluchtende gebohrte Kapillare (42) aufweist, die an den Prismenflächen austritt und durch Brewster-Fenster (44, 46) verschlossen ist.

6. Ringlaserkreisel nach Anspruch 5, dadurch gekennzeichnet, dass die Brewster-Fenster (44, 46) durch nicht-ausgasende O-Ringe (38, 40) umgeben sind.

7. Ringlaserkreisel nach Anspruch 5, gekennzeichnet durch eine in der Ebene des Laserpfades angeordnete Kathode (60) und zwei senkrecht zu der Ebene des Laserpfades im gleichen Abstand von der Kathode (60) angeordnete Anoden (52, 54), die jeweils über Bohrungen (56, 58, 62) mit dem Zentrum bzw. den Enden der Laserkapillare (42) in Verbindung stehen.

8. Ringlaserkreisel nach Anspruch 7, gekennzeichnet durch eine zu der Kathodenbohrung (62) konzentrische Ringnut (64) zur Aufnahme eines Getters.

9. Ringlaserkreisel nach Anspruch 8, gekennzeichnet durch eine Getteraktivierungsbohrung (66) zur Aufnahme einer HF-Heizspule auf der gleichen Achse wie die Kathodenbohrung (62) und auf der gegenüberliegenden Seite der Laserkapillare (42).

10. Ringlaserkreisel nach Anspruch 3, dadurch gekennzeichnet, dass der Resonatorblock (10), die Laserröhre (28) und die Halteplatte (30) jeweils aus Glaskeramik mit sehr geringem thermischem Ausdehnungskoeffizienten hergestellt sind.

11. Ringlaserkreisel nach den Ansprüchen 5 und 10, dadurch gekennzeichnet, dass die Brewster-Fenster (44, 46) aus Quarzglas bestehen und dass die glaskeramische Laserröhre (28) durch Temperatur bezüglich ihres thermischen Ausdehnungskoeffizienten an denjenigen der Brewster-Fenster angeglichen ist.

12. Ringlaserkreisel nach Anspruch 7, dadurch gekennzeichnet, dass die Anoden (52, 54) über Ausnehmungen (48, 50) in der Halteplatte (30) zugänglich sind, deren Durchmesser grösser als der der Anoden ist.

## Claims

1. A ring laser gyro of modular design comprising a resonator block and a laser tube inserted in said block, characterised by a prism-shaped cut-out (26) within said resonator block (10) into which the laser tube (28) shaped as a prismatic counterblock is inserted.

2. Ring laser gyro according to claim 1, characterized in that the prism-shaped cut-out (26) is worked into said resonator block (10) from one surface and one lateral face.

3. Ring laser gyro according to claim 1, characterized in that the surfaces of the prism-shaped cut-out (26) and of the laser tube (28) traversed by the laser beam are inclined under the Brewster angle.

4. Ring laser gyro according to claim 3, characterized by a supporting plate (30) tightenable against the surface of the resonator block (10) for centering the laser tube (28) within the cut-out (26).

5. Ring laser gyro according to claim 4, characterized in that the laser tube (28) comprises a drilled capillary bore (42) aligned to a boring (16) within the resonator block (10) with said capillary bore emerging at the prismatic surfaces and being closed by Brewster windows (44, 46).

6. Ring laser gyro according to claim 5, characterized in that the Brewster window (44, 46) are entoured by non-outgasing O-rings (38, 40).

7. Ring laser gyro according to claim 5, characterized by a cathode (60) arranged in the plane of the laser path and two anodes (52, 54) arranged perpendicular to the laser path and having equal distances from the cathode (60) with said cathode and anodes being connected via borings (56, 58, 62) to the center or end portions, respectively of said capillary bore (42).

8. Ring laser gyro according to claim 7, characterized by a ring-shaped groove (64) concentrically arranged to said cathode boring (62) for receiving a getter.

9. Ring laser gyro according to claim 8, characterized by a getter activating bore (66) for receiving a HF heating coil on the axis of the cathode boring (62) but on the opposite side of the capillary bore (42).

10. Ring laser gyro according to claim 3, characterized in that the resonator block (10), the laser tube (28) and the supporting plate (30) each are fabricated from the glas ceramics having a very low thermal coefficient of expansion.

11. Ring laser gyro according to claims 5 and 10, characterized in that the Brewster windows (44, 46) consist of quartz glas und that the glas-ceramic laser tube (28) by an annealing process is matched to the thermal coefficient of expansion of the Brewster windows.

12. Ring laser gyro according to claim 7, characterized in that the anodes (52, 54) are accessible via recesses (48, 50) within the supporting plate (30) with the diameter of the recesses being larger than the diameter of the anodes.

## Revendications

1. Gyroscope à laser annulaire de structure modulaire comportant un bloc résonnateur et un tube laser incorporé dans ce dernier, caractérisé en ce qu'un évidement prismatique (26) est ménagé dans le bloc résonnateur (10) et reçoit le tube laser (28) ayant la forme d'un bloc prismatique opposé.

2. Gyroscope à laser annulaire selon la revendication 1, caractérisé en ce que l'évidement prismatique (26) est usiné dans le bloc résonnateur (10) à partir d'une surface et d'une face latérale.

3. Gyroscope à laser annulaire selon la revendication 1, caractérisé en ce que les surfaces de l'évidement prismatique (26) et du tube laser (28) traversées par le rayon laser se trouvent dans l'angle d'incidence brewstérienne.

4. Gyroscope à laser annulaire selon la revendication 3, caractérisé par une plaque de retenue (30) susceptible d'être attirée vers la surface du bloc résonnateur (10) et assurant le centrage du tube laser (28) dans l'évidement (26).

5. Gyroscope à laser annulaire selon la revendication 4, caractérisé en ce que le tube laser (28) comporte un tube capillaire (42) percé se trouvant dans l'alignement avec un alésage (16) ménagé dans le bloc résonnateur (10), qui débouche aux surfaces prismatiques et qui est fermé par des fenêtres brewstériennes (44, 46).

6. Gyroscope à laser annulaire selon la revendication 5, caractérisé en ce que les fenêtres brewstériennes (44, 46) sont entourées par des joints torriques (38, 40) ne dégageant pas de gaz.

7. Gyroscope à laser annulaire selon la revendication 5, caractérisé par une cathode (60) disposée dans le plan du chemin laser et par deux anodes (52, 54) montées perpendiculaires au plan du chemin laser à égale distance de la cathode (60) et qui sont en communication avec le centre et/ou les extrémités du tube capillaire laser (42) par des alésages (56, 58, 62).

8. Gyroscope à laser annulaire selon la revendication 7, caractérisé par une rainure annulaire (64) concentrique à l'alésage cathodique (62) destinée à recevoir un getter.

9. Gyroscope à laser annulaire selon la revendication 8, caractérisé par un alésage d'activation du getter (66) destiné à recevoir une bobine de chauffage de haute fréquence disposée dans le même axe que l'alésage cathodique (62) et sur le côté opposé au tube capillaire à laser (42).

10. Gyroscope à laser annulaire selon la revendication 3, caractérisé en ce que le bloc résonnateur (10), le tube laser (28) et la plaque de retenue (30) sont en vitrocéramique avec un très faible coefficient de dilatation thermique.

11. Gyroscope à laser annulaire selon les revendications 5 à 10, caractérisé en ce que les fenêtres brewstériennes (44, 46) sont en verre quartzeux et que le coefficient de dilatation thermique du tube laser en vitrocéramique (28) est adapté à celui des fenêtres brewstériennes par un traitement de revenu.

12. Gyroscope à laser annulaire selon la revendication 7, caractérisé en ce que les anodes (52, 54) sont accessibles par des évidements (48, 50) ménagés dans la plaque de retenue (30), dont le diamètre est supérieur à celui des anodes.

0 117 268

Fig. 2

Fig. 1

5